# EUROPEAN PATENT APPLICATION

(11) **EP 3 104 104 A1**
(43) Date of publication of application: **14.12.2016**
(21) Application number: 15466007.0
(22) Date of filing: 10.06.2015
(51) Int. Cl.: F25B 41/06, F25B 49/02

(54) **PROTECTION CAP WITH AT LEAST ONE SEAL MEMBER FOR SEALING AN APERTURE OF AN HVAC MODULE, AN HVAC MODULE PROVIDED WITH THE PROTECTION CAP AND A METHOD FOR PROTECTING AN APERTURE IN THE EXTERIOR OF AN HVAC MODULE**

(71) Applicant: Valeo Autoklimatizace k.s., P.O. Box 90 26990 Rakovnik (CZ)
(72) Inventor: Casanova, Martina, 170 00 Praha (CZ); Onuska, Ivan, 269 01 Rakovnik (CZ)
(74) Representative: Havlík, Michal

(57) **Abstract**

The present invention relates to a protection cap for an HVAC module, the HVAC module having an internal cavity connected to the exterior by means of an aperture, the protection cap comprising at least one seal member for closing the aperture in a leakproof manner.

## Description

### Technical Field

The present invention relates to a protection cap for a Heating, Ventilation and Air-Conditioning (HVAC) module having an internal volume connected to the exterior by means of an aperture. The invention is especially directed to the connection ports of an expansion valve for an HVAC system. The invention also relates to a method for protecting an HVAC module, such as an evaporator module with the connection ports of an expansion valve for an HVAC system. The protection cap according to the invention is adapted to protect the HVAC module during the transport, manipulation andstorage of the expansion valve.

### Background of the Invention

In the automotive industry, a Heating, Ventilation, and Air-Conditioning (HVAC) system is used for providing thermal comfort and acceptable air quality in a vehicle.

An HVAC system comprises a plurality of devices including, for example, an evaporator module which comprises an evaporator body, an assembly of tubes and an expansion valve. The expansion valve comprises connection ports which are adapted to connect the evaporator module to refrigerant tubes during the assembly of the HVAC system in a vehicle.

In the prior art, the evaporator module of an HVAC system is produced by a supplier and assembled in the HVAC system by an equipment manufacturer. The evaporator module forms a closed, leakproof device and is open to the exterior only by means of the connection ports of the expansion valve.

In the prior art, it is known to close the connection ports of the expansion valve with a cover during transport and storage of the evaporator module to prevent damage to said connection ports and prevent dust and other particles from entering the evaporator module through said connection ports.

An evaporator module must be totally leakproof in order to prevent possible issues arising during the assembly of an HVAC system and during the subsequent use of the HVAC system in a vehicle. Accordingly, a number of tests are carried out to check the leakproofness of the evaporator module during the production of the evaporator module, the assembly of the evaporator module in the HVAC system and the assembly of the HVAC system in a vehicle respectively.

In view of this, a supplier must test an evaporator module for leakproofness before delivering the evaporator module to the equipment manufacturer. The equipment manufacturer must perform a specific leakproofness test to check whether the evaporator module is still leakproof after assembly in the HVAC system. A car manufacturer again performs a further leakproofness test to check whether the evaporator module of the HVAC system is still leakproof prior to filling of refrigerant in the HVAC system in a vehicle. Indeed, a car manufacturer may seek financial compensation from an HVAC manufacturer for any HVAC system that is not leakproof.

The above mentioned leakproof tests are time-consuming and also increase the cost of the overall process of assembling an HVAC system in a vehicle.

In light of the production process of an evaporator module according to the prior art, there is a need to improve the production process to eliminate the need for a plurality of tests for leakproofness of an evaporator module.

### Summary of the Invention

The objective of the invention is to provide a protection cap for an HVAC module, such as a cap for the expansion valve of an evaporator module and a method for protecting said HVAC module to optimize the process of testing the HVAC module for leakproofness.

In one aspect, the present disclosure is directed to a protection cap for an HVAC module, the HVAC module having an internal cavity connected to the exterior by means of an aperture, the protection cap comprising at least one seal member for closing the aperture in a leakproof manner.

According to an embodiment of the invention, it is possible that the protection cap may be adapted to maintain a difference in pressure between the exterior of the HVAC module and the leakproof cavity inside the HVAC module.

According to an embodiment of the invention, it is possible that the protection cap may be adapted to maintain a partial vacuum inside the leakproof cavity of the HVAC module.

According to an embodiment of the invention, it is possible that the protection cap may be adapted to maintain an overpressure inside the leakproof cavity of the HVAC module.

According to an embodiment of the invention, the at least one seal member may be adapted to deform as a result of a pressure difference between the exterior of the HVAC module and the leakproof cavity inside the HVAC module.

According to an embodiment of the invention, it is possible that the protection cap is adapted to close off the exterior part of an expansion valve of an evaporator module, the protection cap being provided with a first seal member and a second seal member, the first seal member being adapted to close off a first connection port of the expansion valve and the second seal member being adapted to close off a second connection port of the expansion valve.

In a further aspect, the present disclosure is directed to an HVAC module provided with an internal cavity inside the HVAC module and an aperture for connecting said internal cavity with the exterior of the HVAC module, wherein the HVAC module comprises a protection cap according to any of the claims 1 to 6, to close off said aperture in a leakproof manner.

In a further aspect, the present disclosure is directed to a method for protecting an aperture in the exterior of an HVAC module, the aperture connecting an internal cavity of the HVAC module with the exterior of the HVAC module, the method comprising:
- closing the aperture in the exterior of the HVAC module with a protective cap adapted to close off the aperture in a leakproof manner to create a leakproof cavity inside the HVAC module, and
- creating a pressure difference between the interior of the leakproof cavity of the HVAC module and the exterior thereof, the created pressure difference providing an indication of the air-tightness of the leakproof cavity.

According to an embodiment of the invention, it is possible that the method comprises:
- closing the aperture in the exterior of the HVAC module with a flexible seal member adapted to deform as a result of a pressure difference between the leakproof cavity and the exterior of the HVAC module, the deformation of the seal member providing a visual indication of the presence of a pressure difference.

According to an embodiment of the invention, it is possible that the method comprises:
- creating a look-up table with at least one reference value for the pressure difference between the interior of the leakproof cavity and the exterior thereof at a determined time interval after the creation of the pressure difference,
- using a pressure gauge to measure the pressure inside the leakproof cavity at a determined time period after the creation of the pressure difference,
- comparing the measured pressure difference with the at least one reference value from the look-up table to obtain an indication of the leakproofness of the leakproof cavity.

### Brief Description of the Drawings

The accompanying drawings illustrate presently exemplary embodiments of the disclosure and help to explain the details of the advantages of the disclosure.
Figure 1 is a schematic representation of an expansion valve for an evaporator module for an HVAC system, wherein the expansion valve is provided with an leakproof protection cap,
Figure 2 shows the expansion valve and the leakproof protection cap according to Figure 1, after a partial vacuum has been created inside the evaporator module, and
Figure 3 shows the expansion valve and the leakproof protection cap according to Figures 1 and 2 during a pressure test to determine the pressure level inside the evaporator module.

In the present text, the term "HVAC system" refers to a system for Heating, Ventilation and Air-Conditioning.

With the term "partial vacuum", reference is made to a low vacuum with a pressure level which is below atmospheric pressure. The partial vacuum inside the evaporator module could be around 0.3 - 0.8 Bar. The partial vacuum could typically be about 0.6 Bar.

In the present text, the term "transportation and storage" is used to refer to the handling of an HVAC system and/or any related module during successive production steps of the production process and final assembly of the HVAC system.

In the present text, the term "leakproofness test" refers to the testing of an object to determine any potential leak of a gas, such as air, or of a liquid.

In the present text, by means of example, reference is made to a manufacturing process comprising the production of an evaporator module by a supplier, the assembly of the evaporator module in an HVAC system by an HVAC manufacturer, and the assembly of the HVAC system in a car by a car manufacturer. It should be understood that the invention could also be used to optimize any other subassembly of an HVAC system. Moreover, the supplier, the HVAC manufacturer and the car manufacturer could perform one or more steps of the described production process.

### Detailed Description of the Invention

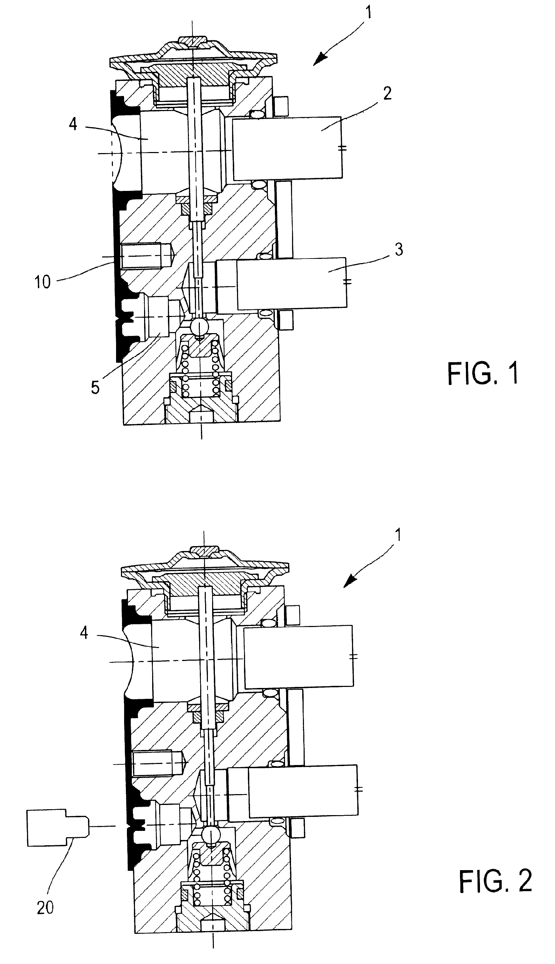

The present invention relates to an evaporator module (not shown) comprising an expansion valve 1, as shown in cross-section in Figure 1. The expansion valve 1 comprises two connection ports 4, 5. The connection ports 4, 5 are adapted to connect the expansion valve 1 to an assembly of tubes (not shown) when assembling the HVAC system in a vehicle. After assembly of the HVAC system, the HVAC system is filled with a fluid such as a refrigerant.

The evaporator module also comprises a first tube 2 and a second tube 3 connected on one side to the expansion valve 1. The evaporator module comprises an evaporator (not shown) also connected to the expansion valve 1 through the first tube 2 and the second tube 3.

As shown in Figure 1, a protection cap 10 covers the connection ports 4, 5. The protection cap 10 simultaneously operates a plurality of functions. The protection cap 10 may protect the inside part of connection ports 4, 5 against mechanical damage. Thus, the interior of the connection ports 4, 5 cannot be damaged and the shape cannot be altered during transportation and/or storage of the evaporator module. Such a protection function guaranties proper connection of the assembly of tubes within the connection ports 4, 5 during the final assembly of the HVAC system in a vehicle.

A further function of the protection cap 10 is to prevent any other particles from entering the interior of the evaporator module. Thus, the inside part of the evaporator module remains clean during its transportation and/or storage. Furthermore, the protection cap 10 also functions as a leakproof closing element for the connection ports 4, 5. Thus, the evaporator module forms a closed and leakproof component creating a corresponding leakproof cavity in which a specific level of pressure may be maintained during transportation and/or storage of the evaporator module. Here, the dashed line indicates the state of the protection cap 10 defore the explained below deformed state.

Figure 2 shows an expansion valve 1 wherein the pressure level is below the atmospheric pressure. Figure 2 shows a nozzle 20 comprising a needle for making a small hole in the protection cap 10. An air pump (not shown) may be connected to the nozzle 20. Once the nozzle 20 is located inside the expansion valve 1, the air pump operates to remove a determined amount of air from the interior of the expansion valve 1 to create a partial vacuum inside expansion valve 1 and thus in the evaporator module. The protection cap 10 is made of a material which allows the introduction and removal of the nozzle 20 while ensuring the protection cap 10 remains leakproof.

The partial vacuum inside the evaporator module in combination with the presence of a leakproof protection cap 10 produces the following technical effects. A first technical effect is that the protection cap 10, due to the partial vacuum, is tightly drawn against the interior of the connection ports 4, 5. The tight contact of the protection cap 10 in the connection ports 4, 5 ensures proper protection of the connection ports 4, 5 against mechanical damage. The tight contact also ensures proper protection from dust or any other particles entering inside the connection ports 4, 5. Moreover, the partial vacuum forces the protection cap 10 to remain in place and thus avoid unintentional removal of the protection cap 10 during transport and storage of the evaporator module.

During the creation of the partial vacuum, part of the protection cap 10 partially moves, from a first position, towards a second position, in the direction of the interior of the expansion valve 1. Figure 2 shows the protection cap 10 in the second position, having a concave shape at the entry of the connection port 4. Due to the partial vacuum inside the expansion valve 1, the protection cap 10 is pulled towards the interior of the expansion valve 1.

The modified shape of the protection cap 10 according to the present invention provides a visible indication of the presence of a partial vacuum. The deformation of the protection cap 10 is also visible from the outside of the evaporator module.

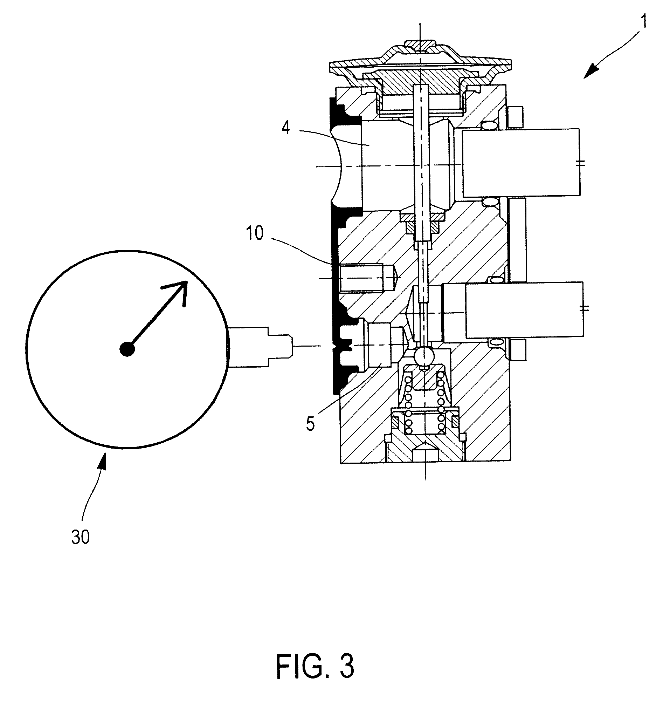

Figure 3 schematically shows the process of measurement of the pressure level inside the evaporator module. A first option is to check whether the shape of the protection cap 10 at the entry of the connection port 4 is modified. The presence or absence of a modified shape provides a first indication of the pressure level inside the evaporator module.

A second option is to measure the current pressure level inside the evaporator module and to compare the measured current pressure level with a reference level. According to Figure 3, the current pressure level is measured at the entry of connection port 5 by means of a pressure gauge 30. The pressure gauge 30 provides the exact current pressure level which can be compared to a reference pressure level such as an expected or allowed pressure level inside the evaporator module.

In practice, the protection cap 10 is used as follows:
The supplier of the evaporator module produces the evaporator module and closes off the connection ports 4, 5 of the expansion valve 1 by means of the protection cap 10. Prior to transporting the evaporator module to an HVAC manufacturer, the supplier creates a partial vacuum inside the evaporator module as described above. If the supplier determines that it is not possible to create a partial vacuum at a required pressure level, this may be an indication that the evaporator module is not leakproof.

Alternatively, if the protection cap 10 is correctly positioned and a partial vacuum is created inside the evaporator module, the presence of the partial vacuum is an indication that the evaporator module is leakproof and can thus be transported to the HVAC manufacturer with the protection cap 10 in place. Upon receipt of the evaporator module, the HVAC manufacturer can check whether the evaporator module is still leakproof. The HVAC manufacturer can verify the deformation of the protection cap 10 with a visual check in combination with a possible pressure level measurement using a pressure gauge 30.

Thus, the HVAC manufacturer does not need to remove the protection cap 10 and may assemble the evaporator module in the HVAC system with the fitted protection cap 10. After the assembly of the HVAC, the HVAC manufacturer may check the presence of the partial vacuum in the evaporator module, and therewith the leakproofness of the evaporator module. If the leakproofness of the evaporator module is confirmed, the HVAC system can be sent to an end customer.

In the current example, the end customer is a car manufacturer who receives the HVAC system with the protection cap 10 in place. The car manufacturer can check whether the evaporator module is still leakproof. The car manufacturer can use visual inspection to verify the deformation of the protection cap 10 in combination with a possible measurement of the pressure level using a pressure gauge 30.

If the evaporator module is still leakproof, the car manufacturer can assemble the HVAC system in a vehicle and fill the HVAC system with a refrigerant.

The presence of the protection cap 10 and the use of a partial vacuum inside the evaporator module eliminate the need to carry out a plurality of tests for leakproofness during the production and assembly processes of the HVAC system.

In the above described example, a leakproof protection cap is used in combination with a partial vacuum inside the evaporator module. It should be understood that, alternatively, a leakproof protection cap could be used in combination with overpressure. The term "overpressure" refers to a pressure level which is higher than atmospheric pressure. In the presence of an overpressure, the protection cap moves outwards under influence of said pressure which modifies the shape of the protection cap. Thus, a modified shape of the protection cap in presence of overpressure acts as a visual indicator. In the presence of overpressure, the protection cap 10 and/or the connection ports with additional fixing means may be added to ensure proper fixing of the protection cap 10 inside the ports despite the presence of overpressure inside the evaporator module.

Moreover, it should be noted that the above described example makes reference to a specific HVAC module, i.e. the evaporator module. The invention could be used for any other HVAC module which forms a leakproof closed cavity.

The presence of a fixing means for the protection cap 10 with a fixing means in the connection ports 4, 5 has no impact on the time needed to produce the evaporator module.

In addition, the time needed to create a partial vacuum inside the evaporator module after the protection cap 10 is fixed does not add additional time to the overall process. Indeed, the use of the protection cap 10 in combination with a partial vacuum replaces the several tests for leakproofness, such as the End Of Line (EOL) test must be done if the protection cap 10 according to the invention is not used.

Thus, the time needed for creating the partial vacuum, according to the present invention, greatly offsets the time needed for carrying out the tests for leadkproofness according to the prior art.

## Claims

1. Protection cap for an HVAC module, the HVAC module having an internal cavity connected to the exterior by means of an aperture, the protection cap comprising at least one seal member for closing the aperture in a leakproof manner.

2. Protection cap according to claim 1, wherein the protection cap is adapted to maintain a difference in pressure between the exterior of the HVAC module and the leakproof cavity inside the HVAC module.

3. Protection cap according to claim 2, wherein the protection cap is adapted to maintain a partial vacuum inside the leakproof cavity of the HVAC module.

4. Protection cap according to claim 2, wherein the protection cap is adapted to maintain an overpressure inside the leakproof cavity of the HVAC module.

5. Protection cap according to claim 2, 3 or 4, wherein the at least one seal member is adapted to deform as a result of a pressure difference between the exterior of the HVAC module and the leakproof cavity inside the HVAC module.

6. Protection cap according to any of the preceding claims, wherein the protection cap is adapted to close off the exterior part of an expansion valve of an evaporator module, the protection cap being provided with a first seal member and a second seal member, the first seal member being adapted to close off a first connection port of the expansion valve and the second seal member being adapted to close off a second connection port of the expansion valve.

7. HVAC module provided with an internal cavity inside the HVAC module and an aperture for connecting said internal cavity with the exterior of the HVAC module, wherein the HVAC module comprises a protection cap according to any of the claims 1 to 6, to close off said aperture in a leakproof manner.

8. Method for protecting an aperture in the exterior of an HVAC module, the aperture connecting an internal cavity of the HVAC module with the exterior of the HVAC module, the method comprising :
- closing the aperture in the exterior of the HVAC module with a protective cap adapted to close off the aperture in a leakproof manner to create a leakproof cavity inside the HVAC module, and
- creating a pressure difference between the interior of the leakproof cavity of the HVAC module and the exterior thereof, the created pressure difference providing an indication of the air-tightness of the leakproof cavity.

9. Method according to claim 8, wherein the method comprises:
- closing the aperture in the exterior of the HVAC module with a flexible seal member adapted to deform as a result of a pressure difference between the leakproof cavity and the exterior of the HVAC module, the deformation of the seal member providing a visual indication for the presence for a pressure difference.

10. Method according to claim 8 or 9, wherein the method comprises:
- creating a look-up table with at least one reference value for the pressure difference between the interior of the leakproof cavity and the exterior thereof at a determined time interval after the creation of the pressure difference,
- using a pressure gauge to measure the pressure inside the leakproof cavity at a determined time interval after the creation of the pressure difference,
- comparing the measured pressure difference with the at least one reference value from the look-up table to obtain an indication of the leakproofness of the leakproof cavity.
